# EUROPÄISCHE PATENTSCHRIFT

(11) **EP 3 947 051 B1**
(45) Veröffentlichungstag und Bekanntmachung des Hinweises auf die Patenterteilung: **25.02.2026**
(21) Anmeldenummer: 20708476.5
(22) Anmeldetag: 02.03.2020
(51) Int. Cl.: B60R 19/18

(54) **ENERGIEABSORPTIONSVORRICHTUNG**
ENERGY ABSORPTION DEVICE
DISPOSITIF D'ABSORPTION D'ÉNERGIE

(30) Priorität: 03.04.2019 DE 102019108742
(43) Veröffentlichungstag der Anmeldung: 09.02.2022
(73) Patentinhaber: Bayerische Motoren Werke Aktiengesellschaft, 80809 München (DE)
(72) Erfinder: KOEHLER, Arne, 85652 Pliening (DE); RUDOLPH, Tim, 80469 München (DE); MANSKE, Tamara, 80999 München (DE); MUSELMANN, Christian, 80935 Muenchen (DE); GROSS, Martin, 85778 Haimhausen (DE); NOVINE, Mazdak, 80636 München (DE); SCHROEDER, Manuel, 82041 Oberhaching (DE)
(86) Internationale Anmeldenummer: PCT/EP2020/055450
(87) Internationale Veröffentlichungsnummer: WO 2020/200604

(56) Entgegenhaltungen:
- EP-A1- 1 417 115
- EP-A2- 1 433 665
- EP-A2- 1 577 168
- CN-A- 105 799 625
- DE-A1- 102006 041 095
- DE-T2- 69 904 140
- JP-A- S60 143 161
- US-A1- 2013 257 070

## Beschreibung

Die Erfindung betrifft eine Energieabsorptionsvorrichtung für einen Stoßfänger eines Fahrzeugs, insbesondere eines Kraftfahrzeugs, nach dem Oberbegriff des Anspruchs 1 sowie ein Kraftfahrzeug gemäß Anspruch 8.

Aus der DE 10 2015 209 746 A1 ist eine Energieabsorptionsvorrichtung für einen Stoßfänger eines Kraftfahrzeugs bekannt, die an der Vorderseite eines als Querträger ausgebildeten Stoßfängers angeordnet ist. Die bekannte Energieabsorptionsvorrichtung setzt sich aus einem einen "Grundkörper" bildenden ersten Deformationselement (in der Terminologie der DE 10 2015 209 746 A1 als "zweites Deformationselement" bezeichnet) und lokalen zweiten Deformationselementen (in der Terminologie der DE 10 2015 209 746 A1 als "drittes Deformationselement" bezeichnet) zusammen. Die zweiten Deformationselemente sind bevorzugt in Verlängerung der Längsträger des Kraftfahrzeugs angeordnet.

Aus der JP S60 143161 A ist eine Energieabsorptionsvorrichtung für einen Stoßfänger eines Fahrzeugs bekannt. Diese weist ein sich im Wesentlichen über die gesamte Breite des Stoßfängers erstreckendes erstes Deformationselement und wenigstens ein zweites Deformationselement auf, das am ersten Deformationselement angeordnet ist, wobei das erste und zweite Deformationselement aus Schaummaterialien unterschiedlicher Dichte bestehen. Die Deformationselemente bestehen aus aufgeschäumtem Polyethylen bzw. Polypropylen, wobei das Schaummaterial des ersten Deformationselements 30- bis 50-fach expandiert ist und das des zweiten Deformationselements 10-fach expandiert ist. Das zweite Deformationselement ist unterhalb bzw. an einer Unterseite des ersten Deformationselements angeordnet.

Aus der DE 10 2006 041 095 A1 ist eine Energieabsorptionsvorrichtung für einen Stoßfänger eines Fahrzeugs bekannt. Diese Energieabsorptionsvorrichtung weist ein erstes Deformationselement und wenigstens zwei zweite Deformationselemente auf, die am ersten Deformationselement angeordnet sind. Das erste und die zweiten Deformationselemente sind aus geschäumtem Kunststoff unterschiedlicher Dichte, wobei die Dichte der zweiten Deformationselemente geringer ist. Die zweiten Deformationselemente haben eine geringere Erstreckung in Fahrzeugquerrichtung und Fahrzeuglängsrichtung, und sind spiegelsymmetrisch zu einer Längsmittenebene des Fahrzeugs im Bereich der Verlängerung von vorderen Längsträgern des Fahrzeugs angeordnet.

In der US 2013/257070 A1 ist eine Energieabsorptionsvorrichtung für einen Stoßfänger eines Fahrzeugs beschrieben, in dem ein erstes Deformationselement eine mittige Ausnehmung aufweist, in der zwei zweite Deformationselemente angeordnet sind. Die ersten und zweiten Deformationselemente sind aus geschäumten Harz, wobei das erste Deformationselement ein verhältnismäßig geringes Expansionsverhältnis und die zweiten Deformationselemente ein verhältnismäßig hohes Expansionsverhältnis aufweisen.

CN105799625A offenbart eine Energieabsorptionsvorrichtung für einen Stoßfänger eines Fahrzeugs, aufweisend ein sich im Wesentlichen über die gesamte Breite des Stoßfängers erstreckendes erstes Deformationselement und wenigstens zwei zweite Deformationselemente, die am ersten Deformationselement angeordnet sind,wobei das erste und zweite Deformationselement aus Schaummaterialien unterschiedlicher Dichte bestehen, wobei das erste Deformationselement jeweils eine Aussparung für die Aufnahme des zweiten Deformationselements aufweist und das zweite Deformationselement in das erste Deformationselement eingesetzt ist und im Vergleich zum ersten Deformationselement eine geringere Erstreckung in Fahrzeugquerrichtung, Fahrzeughochrichtung und Fahrzeuglängsrichtung hat, und wobei die zumindest zwei zweiten Deformationselemente spiegelsymmetrisch zu einer Längsmittenebene des Fahrzeugs im Bereich der Verlängerung von vorderen Längsträgern des Fahrzeugs angeordnet sind.

Aufgabe der Erfindung ist es, eine Energieabsorptionsvorrichtung bereitzustellen, welche verbesserte Eigenschaften aufweist.

Diese Aufgabe wird durch eine Energieabsorptionsvorrichtung mit den Merkmalen des Patentanspruchs 1 gelöst. Patentanspruch 8 betrifft ein Kraftfahrzeug mit einer erfindungsgemäßen Energieabsorptionsvorrichtung.

Kerngedanke der Erfindung ist es, eine Energieabsorptionsvorrichtung aus einem zusammengesetzten Schaumbauteil bereitzustellen, dessen Bestandteile eine deutlich unterschiedliche Dichte und damit eine deutlich unterschiedliche Steifigkeit aufweisen. Erfindungsgemäß hat das Schaummaterial des ersten Deformationselements eine um mindestens 50 g/l geringere Dichte als das zweite Deformationselement ("Dichteabstand"). In Ausgestaltung der Erfindung hat das Schaummaterial des ersten Deformationselements eine um mindestens 60 g/l geringere Dichte als das zweite Deformationselement. In weiterer Ausgestaltung der Erfindung hat das Schaummaterial des ersten Deformationselements eine um mindestens 70 g/l geringere Dichte als das zweite Deformationselement.

Ferner beträgt erfindungsgemäß die Dichte des Schaummaterials des ersten Deformationselements 20 bis 50 g/l ("Dichte 1"). In Ausgestaltung der Erfindung beträgt die Dichte des Schaummaterials des ersten Deformationselements 25 bis 40 g/l. In weiterer Ausgestaltung der Erfindung beträgt die Dichte des Schaummaterials des ersten Deformationselements 25 bis 35 g/l.

Ferner beträgt erfindungsgemäß die Dichte des Schaummaterials des zweiten Deformationselements 80 bis 250 g/l ("Dichte 2"). "). In Ausgestaltung der Erfindung beträgt die Dichte des Schaummaterials des zweiten Deformationselements 90 bis 250 g/l. In weiterer Ausgestaltung der Erfindung beträgt die Dichte des Schaummaterials des zweiten Deformationselements 100 bis 250 g/l.

Alle Angaben zu den Dichtewerten sind mit einer Toleranz von +/- 10 % belegt.

Die Erfindung beinhaltet beliebige Kombinationen des "Dichteabstands" mit der "Dichte 1" und der "Dichte 2", also Paarungen von erstem und zweitem Deformationselement mit einem festgelegten Unterschied in der Dichte der Schaummaterialien der beiden Deformationselemente.

Grundsätzlich ist ein größerer absoluter "Dichteabstand" sinnvoll, wenn die "Dichte 1" einen Wert am oberen Rand des angegeben Bereichs hat, im Vergleich zu einem Wert der "Dichte 1" am unteren Rand des angegeben Bereichs. Damit ergibt sich in beiden Fällen ein vergleichbarer relativer "Dichteabstand".

Die angegebenen Wertebereiche für die Dichten der Schaummaterialien von erstem und zweitem Deformationselement hat die Anmelderin mit neuen Denkansätzen in umfangreichen Untersuchungen ermittelt, bei denen es galt, die zum Teil widersprüchlichen Anforderungen zwischen Fußgängerschutz und "Low Speed Crash" aufzulösen.

Das erste Deformationselement ist in seinem Energieabsorptionsverhalten grundsätzlich auf die Erfordernisse des Fußgängerschutzes ausgelegt.

Um darüber hinaus einem höheren Lasteintrag bei einem so genannten "Low Speed Crash" (Kollisionsgeschwindigkeit < 20 km/h) gerecht zu werden, ist bei der erfindungsgemäßen Energieabsorptionsvorrichtung wenigstens ein zweites Deformationselement mit größerer Steifigkeit vorgesehen. Damit erfüllt die erfindungsgemäße Energieabsorptionsvorrichtung insgesamt sowohl die Anforderungen aus dem Fußgängerschutz als auch aus dem "Low Speed Crash".

Beim "Low Speed Crash" handelt es sich beispielsweise um Parkrempler oder um Auffahrunfälle mit geringer Geschwindigkeit (bzw. geringer Restgeschwindigkeit nach vorangegangener Abbremsung). Derartige Kollisionen liegen in der Regel unter der Auslöseschwelle des Airbagsystems zum Schutz der Insassen des Fahrzeugs. Die bei einem "Low Speed Crash" auftretenden Schäden am Fahrzeug sind so genannte Bagatellschäden, bei denen keine Schädigung der tragenden Struktur des Fahrzeugs eintritt. Dennoch ist es für die Begrenzung des Schadens am Fahrzeug maßgeblich, dass in der Energieabsorptionsvorrichtung möglichst viel Kollisionsenergie abgebaut wird. Dies verringert die Reparaturkosten. Damit kann eine günstigere Kasko-Einstufung der Fahrzeugversicherer erreicht werden.

Die Erfindung zeichnet sich dadurch aus, dass das zweite Deformationselement eine lokale Versteifung des ersten Deformationselements bildet. Dabei kann das erste Deformationselement einen "Grundkörper" bilden, der das zweite Deformationselement in sich oder an sich aufnimmt. Das zweite Deformationselement ist an einigen Positionen des ersten Deformationselements eingesetzt.

Die Position und/oder die Größe des zweiten Deformationselements hängt bzw. hängen von der Ausgestaltung des Fahrzeugs ab, insbesondere von der Ausgestaltung des Stoßfängers und/oder des ersten Deformationselements. Die Auslegung der Energieabsorptionsvorrichtung wird üblicherweise in Versuchen mit Prüfkörpern (zum Beispiel: Barriere, Pendel) vorgenommen. Beispielsweise werden Position und/oder Größe des zweiten Deformationselements so bemessen, dass eine ausreichende geometrische Überdeckung mit den üblicherweise verwendeten Prüfkörpern vorliegt, bei gleichzeitig maximaler Ausdehnung des ersten Deformationselements. Damit erfüllt das Gesamtsystem sowohl die Anforderungen aus dem Fußgängerschutz als auch aus dem "Low Speed Crash".

Mit der Erfindung wird also der Zielkonflikt zwischen Fußgängerschutz und "Low Speed Crash" gelöst, unter Berücksichtigung der Anforderungen aus dem im Fahrzeug zur Verfügung stehenden Bauraum und den aus dem Package des Fahrzeugs vorgegebenen Fahrzeugproportionen.

Dabei wird im "Low Speed Crash" durch das zweite Deformationselement die Intrusion des Prüfkörpers auf ein Minimum reduziert, zur Minimierung des Fahrzeugschadens, bei gleichzeitiger Erfüllung der Fußgängerschutzanforderungen durch gezielten Energieabbau im ersten Deformationselement.

Das zweite Deformationselement hat aufgrund seiner Positionierung am oder im ersten Deformationselement und/oder aufgrund seiner Formgebung und/oder seiner Größe keinen nennenswerten Einfluss auf den Fußgängerschutz.

Das zweite Deformationselement ist in Ausgestaltung der Erfindung so dimensioniert, dass es die Sensierung des Aufpralls eines Fußgängers, beispielsweise durch einen Druckschlauch, nicht beeinflusst. Diese Sensierung dient zum Beispiel der Auslösung von Aktuatoren für eine aktive Frontklappe.

Bei unterschiedlichen Fahrzeugmodellen eines Fahrzeugherstellers und/oder Varianten eines Fahrzeugmodells und/oder Länderausführungen eines Fahrzeugmodells ist es durch die Erfindung in einfacher Weise möglich, durch entsprechende Paarungen von ersten und zweiten Deformationselementen eine individuelle Anpassung zu erreichen. Die Deformationselemente der einzelnen Fahrzeugvarianten können sich hierbei beispielsweise in ihrer Dichte und/oder ihrer Geometrie (Breite, Höhe, Dicke) unterscheiden, ebenso hinsichtlich der Anordnung des zweiten Deformationselements am oder im ersten Deformationselement.

Mit der Erfindung ist die Möglichkeit gegeben, den benötigten Bauraum in Längsrichtung des Fahrzeugs, zwischen der Stoßfängerverkleidung und der Vorderseite des Stoßfängers, zu verkleinern, ohne den Fußgängerschutz und/oder die Anforderungen aus dem "Low Speed Crash" zu beeinträchtigen. Dadurch wird der "Überhang" der Karosserie vor der Vorderachse verringert, was sich positiv auf das äußere Erscheinungsbild des Fahrzeugs auswirkt. Wie bereits oben erwähnt, kann durch die erhöhte Energieaufnahme des zweiten Deformationselements eine geringere crashbedingte Intrusion (und damit ein verringertes Schadensbild am Fahrzeug) erreicht werden, mit Vorteilen hinsichtlich der Versicherungseinstufung des Fahrzeugs. Außerdem ist hinter dem Stoßfänger ein geringerer Deformationsfreiraum erforderlich, beispielsweise für einen hinter dem Stoßfänger angeordneten Kühler.

Das zweite Deformationselement hat im Vergleich zum ersten Deformationselement eine geringere Erstreckung in Fahrzeugquerrichtung und in Fahrzeughochrichtung und in Fahrzeuglängsrichtung. Das zweite Deformationselement stellt also eine lokale Versteifung innerhalb der Energieabsorptionsvorrichtung dar.

Erfindungsgemäß sind wenigstens zwei zweite Deformationselemente vorgesehen, die beispielsweise spiegelsymmetrisch zu einer Längsmittenebene des Fahrzeugs angeordnet sind, am oder im rechten und linken Abschnitt des ersten Deformationselements.

Die zweiten Deformationselemente sind im Bereich der Verlängerung von vorderen Längsträgern des Fahrzeugs angeordnet. Diese vorderen Längsträger werden auch als Motorträger bezeichnet und nehmen an ihren vorderen Enden den Stoßfänger auf. Die vorderen Längsträger haben in ihrem vorderen Bereich so genannte "Defoboxen", zur Energieaufnahme im Crashfall. Das Kraftniveau, ab dem eine Verformung der zweiten Deformationselemente eintritt, liegt beispielsweise etwas unterhalb des Kraftniveaus, ab dem eine Verformung der "Defoboxen" eintritt. Mit dieser Ausgestaltung wird ein Komprimieren des zweiten Deformationselements, gegebenenfalls bis zu seiner Verblockung, erreicht, bevor die "Defobox" aktiviert wird.

Selbstverständlich können auch mehr als zwei zweite Deformationselemente vorgesehen sein. Zusätzlich zur paarweisen Anordnung der zweiten Deformationselemente kann auch ein einzelnes, bevorzugt mittig am oder im ersten Deformationselement angeordnetes zweites Deformationselement vorgesehen sein.

Das erste Deformationselement kann sich durchgehend über zumindest nahezu die ganze Breite des Stoßfängers erstrecken.

Erfindungsgemäß ist das zweite Deformationselement in das erste Deformationselement eingesetzt.

Hierzu sind Aussparungen im ersten Deformationselement vorgesehen, in denen jeweils das zweite Deformationselement aufgenommen ist. Hierdurch weist das erste Deformationselement im Bereich des eingesetzten zweiten Deformationselements eine geringere Materialstärke auf.

Erfindungsgemäß ist das zweite Deformationselement an der Vorderseite des ersten Deformationselements angeordnet, also benachbart zur angrenzenden Stoßfängerverkleidung, oder in die Rückseite des ersten Deformationselements eingesetzt, benachbart zum angrenzenden Stoßfänger.

Das zweite Deformationselement kann quaderähnlich oder pyramidenähnlich ausgestaltet sein. Alternativ kann das zweite Deformationselement streifenförmig ausgebildet sein. Bei beiden Ausgestaltungen kann das zweite Deformationselement an der Vorderseite und/oder an der Rückseite des ersten Deformationselements angeordnet sein.

In einer vorteilhaften Ausgestaltung der Erfindung steht das erste Deformationselement gegenüber dem zweiten Deformationselement vor, so dass im Kollisionsfall zunächst das erste Deformationselement komprimiert wird. Wie bereits oben ausgeführt, kann das erste Deformationselement jedoch auch "hinter" oder "in" dem zweiten Deformationselement angeordnet sein.

Allen oben genannten Ausführungsformen ist jedoch gemeinsam, dass aufgrund der geringeren Dichte des ersten Deformationselements zunächst das erste Deformationselement komprimiert wird, bevor nachfolgend das zweite Deformationselement komprimiert wird.

Alle oben verwendeten Lagebezeichnungen beziehen sich auf die Einbaulage einer erfindungsgemäßen Energieabsorptionsvorrichtung in ein Fahrzeug.

Die Herstellung der erfindungsgemäßen Energieabsorptionsvorrichtung, die sich aus dem "Grundkörper" des ersten Deformationselements und dem darin eingesetzten oder damit verbundenen zweiten Deformationselement zusammensetzt, kann auf unterschiedliche Weise erfolgen. Zum einen kann es sich um "gebaute Energieabsorptionsvorrichtungen" mit separat hergestellten und nachträglich zusammengefügten Schaumbauteilen handeln. Andererseits kann die Energieabsorptionsvorrichtung aus untrennbar miteinander verbundenen Schaumbestandteilen ("Mehrkomponentenschaumbauteilen") bestehen.

Bei einer "gebauten Energieabsorptionsvorrichtung" werden erstes und zweites Deformationselement separat hergestellt. Das erste Deformationselement weist in Ausgestaltung der Erfindung eine Aussparung zur Aufnahme für das zweite Deformationselement auf. Das zweite Deformationselement wird in die Aussparung des ersten Deformationselements eingesetzt und beispielsweise durch eine formschlüssige Verbindung im ersten Deformationselement fixiert. Die formschlüssige Verbindung kann zum Beispiel mit dem Einsetzen des zweiten Deformationselements ("Hartschaum-Bauteil") in das erste Deformationselement erfolgen, beispielsweise in einen Hinterschnitt oder entlang von Schrägflächen des ersten Deformationselements. Alternativ oder zusätzlich kann das zweite Deformationselement durch Verklebung mit dem ersten Deformationselement verbunden sein.

Alternativ oder zusätzlich können Zusatzelemente zur Fixierung des zweiten Deformationselements am ersten Deformationselement vorgesehen sein, wie beispielsweise Klipse.

In der vorangegangenen Beschreibung ist in Zusammenhang mit dem "zweiten Deformationselement" grundsätzlich der Singular verwendet, in dem Sinn, dass es sich dabei um "mindestens ein zweites Deformationselement" handelt.

Die Erfindung betrifft weiterhin ein Kraftfahrzeug mit einer erfindungsgemäßen Energieabsorptionsvorrichtung.

Mögliche Ausführungsbeispiele der Erfindung sind in der Zeichnung dargestellt und werden nachfolgend näher erläutert. Es zeigt:
- Fig. 1: eine schematische Darstellung einer Stoßfängeranordnung mit einer Energieabsorptionsvorrichtung nach dem Stand der Technik (linke Hälfte von Fig. 1) bzw. einer erfindungsgemäßen Energieabsorptionsvorrichtung (rechte Hälfte von Fig. 1),
- Fig. 2: eine perspektivische Darstellung eines ersten Deformationselements für einen Stoßfänger, nach dem Stand der Technik,
- Fig. 3: eine der Fig. 2 entsprechende Darstellung eines erfindungsgemäßen ersten Deformationselements mit eingesetzten zweiten Deformationselementen,
- Fig. 4: eine vergrößerte Darstellung des Details Z von Fig. 3, mit separat dargestelltem zweiten Deformationselement,
- Fig. 5: ein zweites Ausführungsbeispiel der Erfindung in perspektivischer Darstellung,
- Fig. 6: eine perspektivische Schnittdarstellung gemäß der Schnittverlaufslinie VI-VI in Fig. 5,
- Fig. 7: eine perspektivische Schnittdarstellung gemäß der Schnittverlaufslinie VII-VII in Fig. 5,
- Fig. 8: ein Beispiel zu Erklärungszwecken in perspektivischer Darstellung und
- Fig. 9: eine perspektivische Schnittdarstellung gemäß der Schnittverlaufslinie IX - IX in Fig. 8.

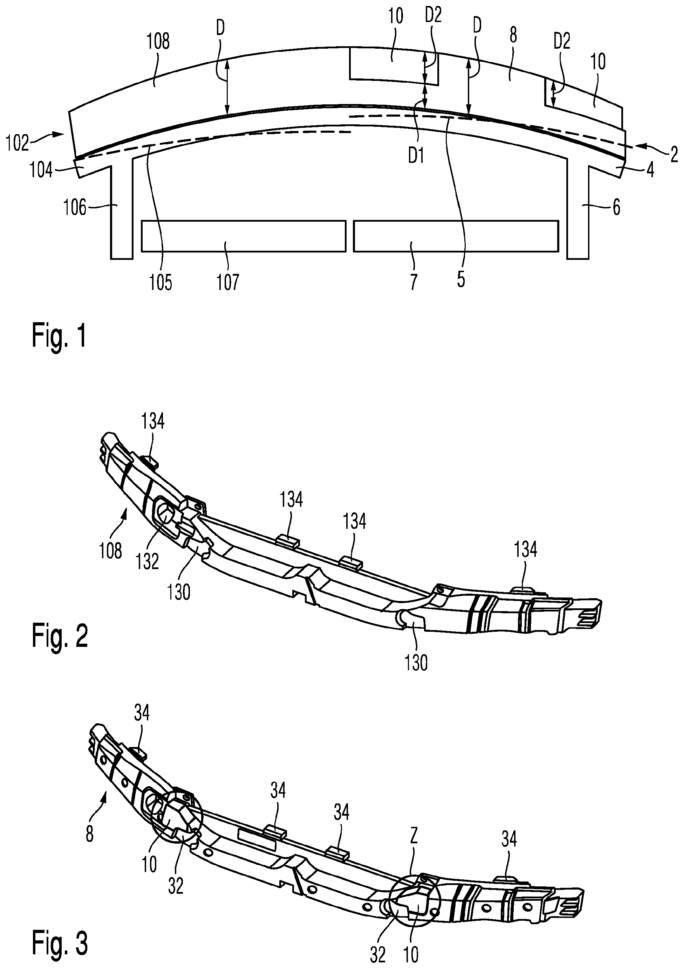

Fig. 1 erläutert den Aufbau einer Energieabsorptionsvorrichtung nach dem Stand der Technik im Vergleich zu einer erfindungsgemäßen Energieabsorptionsvorrichtung.

Eine in ihrer Gesamtheit mit 102 bezeichnete bekannte Stoßfängeranordnung für ein Kraftfahrzeug weist einen in Querrichtung des Kraftfahrzeugs verlaufenden Stoßfänger 104 (Stoßfängerquerträger) auf, der über einen linken Längsträger 106 und einen nicht dargestellten rechten Längsträger an die tragende Struktur des Kraftfahrzeugs angebunden ist. Der Stoßfänger 104 ist mit einer Energieabsorptionsvorrichtung versehen, die von einem vorderseitig am Stoßfänger 104 angeordneten ersten Deformationselement 108 gebildet wird. Eine Vorderkante einer Frontklappe des Kraftfahrzeugs ist mit 105 bezeichnet. Entgegen der Fahrtrichtung ist hinter der Stoßfängeranordnung 102 unter anderem ein Kühler 107 vorgesehen. Das erste Deformationselement 108 hat eine Dicke D von beispielsweise 80 mm. Die Dicke D kann in Querrichtung des Kraftfahrzeugs etwa gleichbleibend sein oder in Querrichtung des Kraftfahrzeugs variieren.

Die in ihrer Gesamtheit mit 2 bezeichnete erfindungsgemäße Stoßfängeranordnung für ein Kraftfahrzeug weist ebenfalls einen in Querrichtung des Kraftfahrzeugs verlaufenden Stoßfänger 4 (Stoßfängerquerträger) auf, der über einen nicht dargestellten linken und einen rechten Längsträger 6 an die tragende Struktur des Kraftfahrzeugs angebunden ist. An der Vorderseite des Stoßfängers 4 ist eine Energieabsorptionsvorrichtung mit einem ersten Deformationselement 8 angeordnet. In das erste Deformationselement 8 sind je Fahrzeugseite (nur rechte Seite dargestellt) ein äußeres und ein inneres zweites Deformationselement 10 eingesetzt. Eine Vorderkante der Frontklappe des Kraftfahrzeugs ist mit 5 bezeichnet. Hinter der Stoßfängeranordnung 2 ist unter anderem ein Kühler 7 vorgesehen.

Das erste Deformationselement 8 besteht aus einem Schaummaterial, vorzugsweise aus einem Kunststoffmaterial, beispielsweise EPP oder PU, zum Bespiel mit einer in Quer-, Längs- und Höhenrichtung des Kraftfahrzeugs einheitlichen Dichte von beispielsweise etwa 30 g/l. Die zweiten Deformationselemente 10 bestehen ebenfalls aus einem Schaummaterial, vorzugsweise aus einem Kunststoffmaterial, beispielsweise EPP oder PU. Die Dichte der zweiten Deformationselemente 10 ist deutlich höher als die Dichte des ersten Deformationselements 8 und beträgt beispielsweise etwa 100 g/l.

Dementsprechend ist auch die Steifigkeit der zweiten Deformationselemente 10 deutlich größer als die Steifigkeit des ersten Deformationselements 8. Demzufolge handelt es sich bei den zweiten Deformationselementen 10 um so genannte "Hartschaumteile".

Das Schaummaterial von erstem und/oder zweitem Deformationselement wird beispielsweise von einem Partikelschaum, wie EPP, gebildet. Ebenso kommt zum Beispiel ein PUR-Schaum in Frage.

Das erste Deformationselement 8 hat in den Abschnitten, in denen kein zweites Deformationselement 10 vorgesehen ist, eine Dicke D von beispielsweise 80 mm. In den Bereichen mit zweitem Deformationselement 10 beträgt die Dicke D1 des ersten Deformationselements 8 beispielsweise 40 mm. Die Dicke D2 des zweiten Deformationselements 10 beträgt zum Beispiel 40 mm. Unter "Dicke'" ist dabei die Erstreckung in Längsrichtung des Kraftfahrzeugs zu verstehen.

Durch die zweiten Deformationselemente 10 wird beispielsweise bei einem standardisierten Prüfverfahren (zum Beispiel einem Pendelschlagversuch) die Eindringtiefe des Kollisionsgegenstands aufgrund der lokalen Versteifung durch die zweiten Deformationselemente 10 lokal signifikant reduziert. Durch die verringerte Eindringtiefe kann die Vorderkante 5 der Frontklappe des Kraftfahrzeugs weiter nach vorne gezogen werden als dies bei einem Kraftfahrzeug nach dem Stand der Technik der Fall ist.

In Fig. 2 ist ein erstes Deformationselement 108 nach dem Stand der Technik gezeigt, das als Schaumformteil ausgebildet ist. Die Außenkontur des ersten Deformationselements 108 ist an die Innenseite einer nicht dargestellten Stoßfängerverkleidung angepasst, so dass sich die in Fig. 2 dargestellte "zerklüftete" Außenkontur ergibt. Beispielsweise hat das Deformationselement 108 Aussparungen 130 für PDC-Sensoren sowie eine Aussparung 132 für eine Abschleppöse. Die in Fig. 2 nicht sichtbare Rückseite des Deformationselements 108 ist entsprechend des nicht dargestellten korrespondierenden Stoßfängers 104 geformt, im Sinn einer großflächigen Anlagefläche. Ferner ist eine Mehrzahl von Fixierungsarmen 134 ersichtlich, mit denen das erste Deformationselement 108 am Stoßfänger 104 formschlüssig angeordnet werden kann.

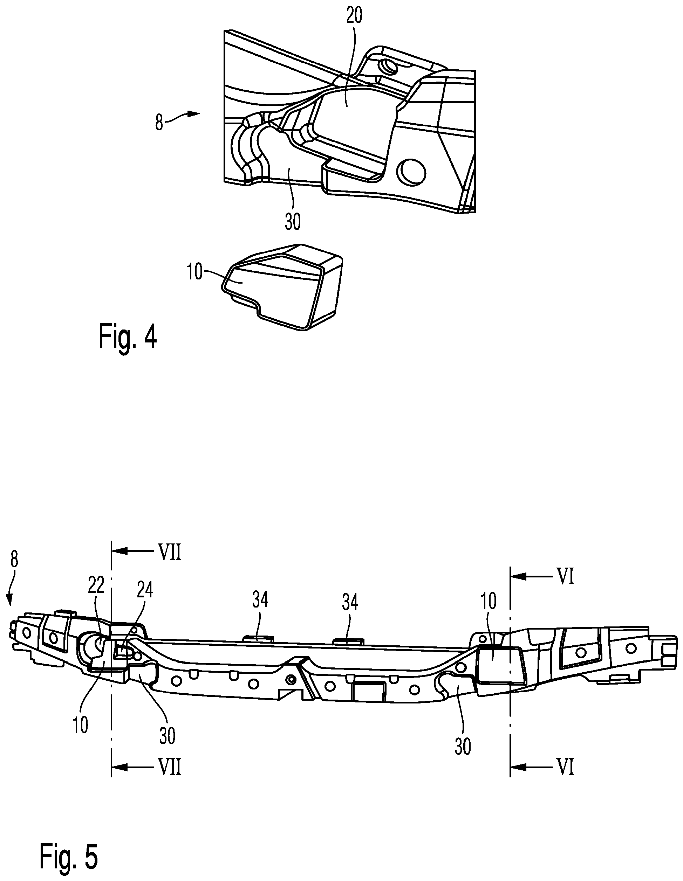

Fig. 3 zeigt ein erfindungsgemäßes erstes Deformationselement 8, das mit Ausnahme einer rechten und einer linken Aussparung 20 (in Fig. 4 dargestellt) identisch zum ersten Deformationselement 108 gemäß Fig. 2 ist. Die Aussparungen 20 dienen erfindungsgemäß der Aufnahme eines rechten und eines linken zweiten Deformationselements 10. Im Übrigen hat das erste Deformationselement 8 dem ersten Deformationselement 108 entsprechende Aussparungen 30 und 32 sowie Fixierungsarme 34.

In Fig. 4 ist der maßgebliche Unterschied zwischen dem bekannten Deformationselement 108 und dem erfindungsgemäßen Deformationselement 8 vergrößert dargestellt. Das zweite Deformationselement 10 ist beispielsweise als Hartschaumkörper ausgebildet, der in die Aussparung 20 des ersten Deformationselements 8 eingeklipst werden kann. Das erste Deformationselement 8 ist beispielsweise als Schaumformteil ausgeführt.

Fig. 5 zeigt ein zweites Ausführungsbeispiel der Erfindung. Die Deformationselemente 8 und 10 des Ausführungsbeispiels gemäß Fig. 5 sind beispielsweise an die Gestaltung einer Stoßfängerverkleidung für eine Ausstattungsvariante angepasst. Gleiche und gleichwirkende Bauteile sind mit denselben Bezugszeichen wie im ersten Ausführungsbeispiel versehen.

Abweichend vom ersten Ausführungsbeispiel sind gemäß Fig. 5 das rechte und das linke zweite Deformationselement 10 geometrisch unterschiedlich gestaltet. Das rechte zweite Deformationselement 10 weist im Unterschied zum linken zweiten Deformationselement 10 außenseitig eine Aussparung 22 für eine Befestigungsbuchse für eine einschraubbare Abschleppöse auf. Außerdem ist an der Vorderseite des rechten zweiten Deformationselements 10 eine Aussparung 24 für einen Deckel zur Abdeckung der Öffnung für die Abschleppöse vorgesehen.

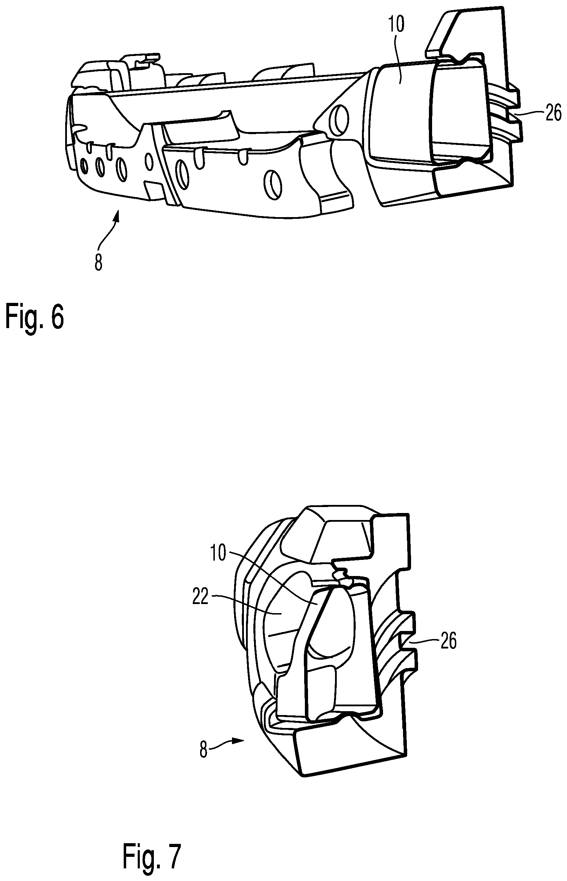

Die Fig. 6 und 7 zeigen die beiden Deformationselemente 10 in vergrößerten Schnittdarstellungen. Hierbei ist an der Rückseite des ersten Deformationselements 8 ein Kanal 26 zur Aufnahme eines nicht dargestellten Fluidschlauchs zur Sensierung eines Aufpralls am Stoßfänger 4 dargestellt.

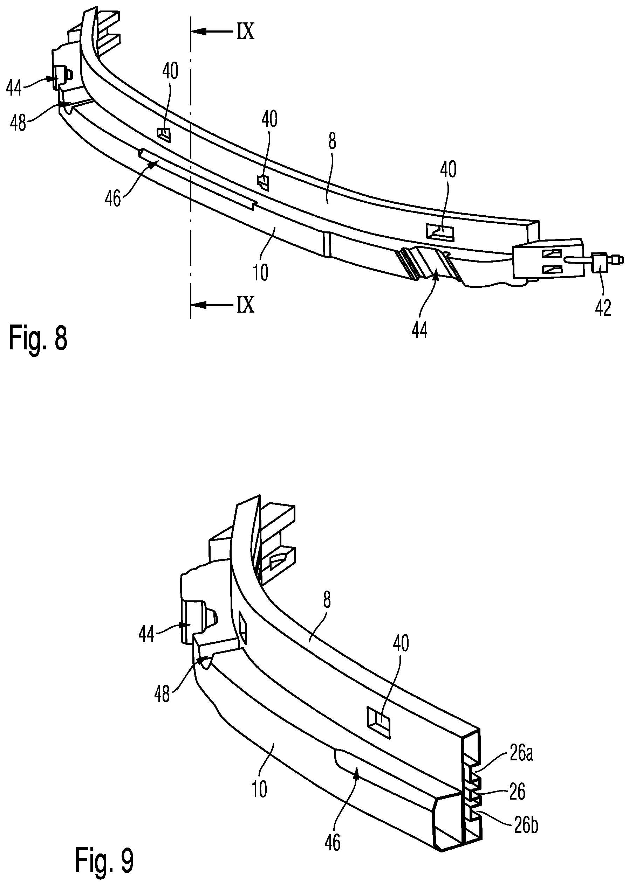

Die Fig. 8 und 9 zeigen eine Energieabsorptionsvorrichtung zu Erklärungszwecken mit einem ersten und einem zweiten Deformationselement 8 bzw. 10. Beide Deformationselemente 8 und 10 erstrecken sich über einen wesentlichen Teil der Breite eines nicht dargestellten Stoßfängers (Stoßfängerquerträger). Hierbei ist das erste Deformationselement 8 zur vollflächigen Anlage am Stoßfänger ausgebildet. Das erste Deformationselement 8 hat Aussparungen 40, in die Befestigungselemente (zum Beispiel Montagestopfen) zur Anbindung an den Stoßfänger einsetzbar sind. An der dem Stoßfänger zugewandten Rückseite des ersten Deformationselements 8 ist ein Kanal 26 für die Aufnahme eines Fluidschlauchs 42 vorgesehen. Der Fluidschlauch 42 dient der Sensierung eines Aufpralls am Stoßfänger. Die benachbarten Kanäle 26a und 26b im ersten Deformationselement 8 ermöglichen eine ungehinderte Verformung des mittleren Kanals 26, damit sich der Fluidschlauch 42 im Fall eines Fußgängeraufpralls in optimaler Weise verformen und damit den Aufprall bestmöglich sensieren kann.

Das zweite Deformationselement 10 ist streifenförmig ausgebildet und im unteren Bereich der Vorderseite des ersten Deformationselements 8 angeordnet, dem ersten Deformationselement 8 also vorgelagert. Es ist mit dem ersten Deformationselement 8 beispielsweise durch Verklebung verbunden. Dabei überragt das zweite Deformationselement 10 das erste Deformationselement 8 jeweils an den seitlichen Endabschnitten. Die Höhe des zweiten Deformationselements 10 ist etwa halb so groß wie die Höhe des ersten Deformationselements 8. Das zweite Deformationselement 10 hat im Vergleich zum ersten Deformationselement 8 eine etwas größere Dicke. An der Vorderseite und/oder der Oberseite des zweiten Deformationselements 10 sind Aussparungen 44, 46 und 48 vorgesehen, beispielsweise zur Durchführung einer Abschleppöse oder zur Schaffung eines Freiraums für PDC-Sensoren.

Das erste Deformationselement 8 hat eine Dichte von beispielsweise etwa 30 g/l, während das zweite Deformationselement 10 eine Dichte von beispielsweise 130 g/l aufweist.

Die Darstellung der Fig. 9 basiert auf einer CAD-Schnittdarstellung. Zur Klarstellung wird darauf hingewiesen, dass es sich bei den beiden Deformationselementen 8 und 10 selbstverständlich um Vollmaterialien handelt.

Die Erfindung lässt sich wie folgt zusammenfassen: Eine Energieabsorptionsvorrichtung für einen Stoßfänger 4 eines Kraftfahrzeugs weist an der Vorderseite des Stoßfängers 4 ein erstes Deformationselement 8 auf. Das erste Deformationselement 8 ist ein über die Breite des Stoßfängers 4 reichendes Schaumformteil mit einer Dichte von 20 bis 50 g/l. In das erste Deformationselement 8 ist wenigstens ein zweites Deformationselement 10 eingesetzt, mit einer um mindestens 50 g/l höheren Dichte als das erste Deformationselement.

### Bezugszeichenliste

- 2: Stoßfängeranordnung
- 4: Stoßfänger
- 5: Vorderkante der Frontklappe
- 6: Längsträger
- 7: Kühler
- 8: erstes Deformationselement
- 10: zweites Deformationselement
- 20: Aussparung
- 22: Aussparung
- 24: Aussparung
- 26: Kanal
- 26a: Kanal
- 26b: Kanal
- 30: Aussparung
- 32: Aussparung
- 34: Fixierungsarm
- 40: Aussparung
- 42: Druckschlauch
- 44: Aussparung
- 46: Aussparung
- 48: Aussparung
- 102: Stoßfängeranordnung
- 104: Stoßfänger
- 105: Vorderkante der Frontklappe
- 106: Längsträger
- 107: Kühler
- 108: erstes Deformationselement
- 130: Aussparung
- 132: Aussparung
- 134: Fixierungsarm
- D: Dicke
- D1: Dicke
- D2: Dicke
- Z: Detail

## Patentansprüche

1. Energieabsorptionsvorrichtung für einen Stoßfänger eines Fahrzeugs, aufweisend ein sich im Wesentlichen über die gesamte Breite des Stoßfängers erstreckendes erstes Deformationselement (8) und wenigstens zwei zweite Deformationselemente (10), die am ersten Deformationselement (8) angeordnet sind,
wobei das erste und zweite Deformationselement (8, 10) aus Schaummaterialien unterschiedlicher Dichte bestehen, wobei das Schaummaterial des ersten Deformationselements (8) eine um mindestens 50 g/l geringere Dichte als das Schaummaterial des zweiten Deformationselements (10) hat, wobei die Dichte des Schaummaterials des ersten Deformationselements (8) 20 bis 50 g/l und die Dichte des Schaummaterials des zweiten Deformationselements (10) 80 bis 250 g/l beträgt,
wobei das erste Deformationselement (8) jeweils eine Aussparung (22) für die Aufnahme des zweiten Deformationselements (10) aufweist und das zweite Deformationselement (10) in das erste Deformationselement (8) eingesetzt ist und im Vergleich zum ersten Deformationselement eine geringere Erstreckung in Fahrzeugquerrichtung, Fahrzeughochrichtung und Fahrzeuglängsrichtung hat,
wobei das zweite Deformationselement (10) an der Vorderseite oder Rückseite des ersten Deformationselements (8) angeordnet ist, und
wobei die zumindest zwei zweiten Deformationselemente (10) spiegelsymmetrisch zu einer Längsmittenebene des Fahrzeugs im Bereich der Verlängerung von vorderen Längsträgern des Fahrzeugs angeordnet sind.

2. Energieabsorptionsvorrichtung nach Anspruch 1,
wobei das Schaummaterial des ersten Deformationselements (8) eine um mindestens 60 g/l geringere Dichte als das Schaummaterial des zweiten Deformationselements (10) hat.

3. Energieabsorptionsvorrichtung nach Anspruch 1,
wobei das Schaummaterial des ersten Deformationselements (8) eine um mindestens 70 g/l geringere Dichte als das Schaummaterial des zweiten Deformationselements (10) hat.

4. Energieabsorptionsvorrichtung nach einem der Ansprüche 1 bis 3,
wobei die Dichte des Schaummaterials des zweiten Deformationselements (10) 90 bis 250 g/l beträgt.

5. Energieabsorptionsvorrichtung nach einem der Ansprüche 1 bis 3,
wobei die Dichte des Schaummaterials des zweiten Deformationselements (10) 100 bis 250 g/l beträgt.

6. Energieabsorptionsvorrichtung nach einem der vorangegangenen Ansprüche, wobei das zweite Deformationselement (10) quaderähnlich oder pyramidenähnlich ausbildet ist.

7. Energieabsorptionsvorrichtung nach einem der vorangegangenen Ansprüche, wobei das zweite Deformationselement (10) durch Formschluss und/oder Verklebung und/oder mittels separater Verbindungselemente mit dem ersten Deformationselement (8) verbunden ist.

8. Kraftfahrzeug mit einer Energieabsorptionsvorrichtung nach einem der vorgenannten Ansprüche.

## Claims

1. Energy absorption device for a bumper of a vehicle, comprising a first deformation element (8) extending substantially over the entire width of the bumper and at least two second deformation elements (10) which are arranged on the first deformation element (8),
wherein the first and second deformation element (8, 10) consist of foam materials of different density, wherein the foam material of the first deformation element (8) has a density at least 50 g/l lower than the foam material of the second deformation element (10), wherein the density of the foam material of the first deformation element (8) is 20 to 50 g/l and the density of the foam material of the second deformation element (10) is 80 to 250 g/l,
wherein the first deformation element (8) has in each case a recess (22) for receiving the second deformation element (10) and the second deformation element (10) is inserted into the first deformation element (8) and has a smaller extension in vehicle transverse direction, vehicle vertical direction and vehicle longitudinal direction compared to the first deformation element,
wherein the second deformation element (10) is arranged on the front side or rear side of the first deformation element (8), and
wherein the at least two second deformation elements (10) are arranged mirrorsymmetrically to a longitudinal center plane of the vehicle in the region of the extension of front longitudinal members of the vehicle.

2. Energy absorption device according to claim 1,
wherein the foam material of the first deformation element (8) has a density at least 60 g/l lower than the foam material of the second deformation element (10).

3. Energy absorption device according to claim 1,
wherein the foam material of the first deformation element (8) has a density at least 70 g/l lower than the foam material of the second deformation element (10).

4. Energy absorption device according to one of claims 1 to 3,
wherein the density of the foam material of the second deformation element (10) is 90 to 250 g/l.

5. Energy absorption device according to one of claims 1 to 3,
wherein the density of the foam material of the second deformation element (10) is 100 to 250 g/l.

6. Energy absorption device according to one of the preceding claims,
wherein the second deformation element (10) is designed cuboid-like or pyramid-like.

7. Energy absorption device according to one of the preceding claims,
wherein the second deformation element (10) is connected to the first deformation element (8) by form fit and/or adhesive bonding and/or by means of separate connecting elements.

8. Motor vehicle with an energy absorption device according to one of the aforementioned claims.

## Revendications

1. Dispositif d'absorption d'énergie pour un pare-chocs d'un véhicule, comprenant un premier élément de déformation (8) s'étendant sensiblement sur toute la largeur du pare-chocs et au moins deux seconds éléments de déformation (10) qui sont disposés sur le premier élément de déformation (8),
dans lequel le premier et le second élément de déformation (8, 10) sont constitués de matériaux de mousse de densité différente, dans lequel le matériau de mousse du premier élément de déformation (8) a une densité inférieure d'au moins 50 g/l à celle du matériau de mousse du second élément de déformation (10), dans lequel la densité du matériau de mousse du premier élément de déformation (8) est de 20 à 50 g/l et la densité du matériau de mousse du second élément de déformation (10) est de 80 à 250 g/l,
dans lequel le premier élément de déformation (8) présente respectivement un évidement (22) pour recevoir le second élément de déformation (10) et le second élément de déformation (10) est inséré dans le premier élément de déformation (8) et a une extension plus petite en direction transversale du véhicule, en direction verticale du véhicule et en direction longitudinale du véhicule par rapport au premier élément de déformation,
dans lequel le second élément de déformation (10) est disposé sur le côté avant ou le côté arrière du premier élément de déformation (8), et
dans lequel les au moins deux seconds éléments de déformation (10) sont disposés symétriquement par rapport à un plan médian longitudinal du véhicule dans la région du prolongement de longerons avant du véhicule.

2. Dispositif d'absorption d'énergie selon la revendication 1,
dans lequel le matériau de mousse du premier élément de déformation (8) a une densité inférieure d'au moins 60 g/l à celle du matériau de mousse du second élément de déformation (10).

3. Dispositif d'absorption d'énergie selon la revendication 1,
dans lequel le matériau de mousse du premier élément de déformation (8) a une densité inférieure d'au moins 70 g/l à celle du matériau de mousse du second élément de déformation (10).

4. Dispositif d'absorption d'énergie selon l'une des revendications 1 à 3,
dans lequel la densité du matériau de mousse du second élément de déformation (10) est de 90 à 250 g/l.

5. Dispositif d'absorption d'énergie selon l'une des revendications 1 à 3,
dans lequel la densité du matériau de mousse du second élément de déformation (10) est de 100 à 250 g/l.

6. Dispositif d'absorption d'énergie selon l'une des revendications précédentes,
dans lequel le second élément de déformation (10) est réalisé de manière similaire à un parallélépipède ou similaire à une pyramide.

7. Dispositif d'absorption d'énergie selon l'une des revendications précédentes,
dans lequel le second élément de déformation (10) est relié au premier élément de déformation (8) par complémentarité de formes et/ou collage et/ou au moyen d'éléments de liaison séparés.

8. Véhicule automobile avec un dispositif d'absorption d'énergie selon l'une des revendications précitées.
